(19) **Europäisches Patentamt**

**European Patent Office**

**Office européen des brevets**

(11) Numéro de publication: **0 065 445**

**B1**

(12) **FASCICULE DE BREVET EUROPEEN**

(45) Date de publication du fascicule du brevet: **20.11.86**

(51) Int. Cl.⁴: **G 01 R 31/28**

(21) Numéro de dépôt: **82400795.9**

(22) Date de dépôt: **30.04.82**

(54) **Procédé et dispositif de sélection de circuits intégrés à haute fiabilité.**

(30) Priorité: **15.05.81 FR 8109757**

(43) Date de publication de la demande:
**24.11.82 Bulletin 82/47**

(45) Mention de la délivrance du brevet:
**20.11.86 Bulletin 86/47**

(84) Etats contractants désignés:
**DE GB**

(56) Documents cités:
**FR-A-2 123 423**
**FR-A-2 330 014**
**US-A-3 789 205**

**IBM TECHNICAL DISCLOSURE BULLETIN, vol.
14, no. 10, mars 1972, pages 2937-2938, New
York, US A.D. SAVKAR: "N-Way Testpoint for
complex LSI design"**

**IBM TECHNICAL DISCLOSURE BULLETIN, vol.
21, no. 8, janvier 1979, pages 3233-3234, New
York, US R. REMSHARDT et al.: "Testing LSI
chips"**

(73) Titulaire: **THOMSON-CSF
173, Boulevard Haussmann
F-75379 Paris Cedex 08 (FR)**

(72) Inventeur: **Charruau, Stéphane
THOMSON-CSF SCPI 173, bld Haussmann
F-75379 Paris Cedex 08 (FR)**

(74) Mandataire: **Trocellier, Roger et al
THOMSON-CSF SCPI 19, avenue de Messine
F-75008 Paris (FR)**

(56) References cited:
**BM TECHNICAL DISCLOSURE BULLETIN, vol.
22, no. 2, aou7t 1979, pages 1018-1021, New
York, US B. ABILEVITZ et al.: "Circuit for
facilitating the testing of semiconductor chips
mounted on a module"**

EP 0 065 445 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne un procédé de sélection de circuits intégrés à haute fiabilité et le dispositif correspondant.

De tels dispositifs permettent de sélectionner des circuits intégrés en vue d'application à haute fiabilité. La sélection est opérée en fonction de contraintes sévères prédéterminées thermiques et dynamiques. Un tel ensemble est encore appelé système de déverminage climatique et dynamique (dynamic burn-in testing, selon l'appellation anglo-saxonne). Un équipement de ce genre est utilisé pour produire en vieillissement accéléré des composants entraînant la panne pour ceux qui s'avèrent inaptes à supporter les contraintes imposées et consécutivement, la sélection des autres composants répondant aux normes désirées et qui permettront ensuite de réaliser des équipements présentant un taux de défaillance minime et donc une haute fiabilité.

Ces systèmes de sélection comportent un ensemble d'amplificateurs de puissance bidirectionnels destinés à exciter des groupes distincts de circuits intégrés de types differents mis dans une chambre climatique. L'invention se rapporte en particulier au moyen de pilotage c'est-à-dire de commande, de l'ensemble amplificateur de puissance. Les solutions actuelles sur ce point sont à base de matériel (hardware selon l'appellation anglo-saxonne) utilisant une logique câblée en fonction du type ·de circuit intégré à sélectionner ou dans des versions plus récentes, une logique de génération des stimuli mémorisés dans une mémoire programmable PROM. Ceci conduit à créer un service spécialisé d'études parallèles au service de production des circuits haute fiabilité. Ce service d'études doit faire une analyse approfondie des logigrammes et des chronogrammes d'excitation par type de circuits intégrés; il en déduit ou bien une notice de montage—câblage de court-circuit (strapps) à réaliser sur des plats (matrix board), ou bien un programme binaire à charger dans une mémoire programmable PROM. Les circuits matriciels ou les mémoires PROM chargés doivent ensuire être emmagasinés et gérés au fur et à mesure de l'exercice de sélection des circuits intégrés.

Une telle structuration doit rester assez figée car toute modification de spécification de circuit à la demande de l'utilisateur, ou toute évolution de specification de circuit standard, ou toute création de nouvelle famille technologique de circuits intégrés engendrent une charge importante de travail génératrice de retard dans l'exercice de la sélection. En outre, on peut considérer que le travail d'analyse évoqué précédemment fait double emploi avec celui qui a été fait par le service de programmation sur testeur automatique de circuits intégrés au sein du contrôle entrée de l'entreprise de l'utilisateur.

Un autre inconvénient résulte de la chaleur dégagée par les circuits intégrés à sélectionner.

Les calories fournies créent un deséquilibre thermique dans l'étuve et nécessitant des circuits de régulation relativement complexes, pour maintenir la température de fonctionnement prévue ainsi qu'une limitation du nombre des circuits intégrés à disposer dans l'étuve, ce nombre étant lui-même fonction des différents types de circuits à considérer et des quantités respectives par groupes.

Un autre facteur à considérer résulte de l'excitation continue et simultanée des différents types de circuits intégrés à sélectionner, ce qui exige un nombre élevé d'amplificateurs de puissance et une connectique associéee assez complexe pour exciter les bornes correspondantes des circuits intégrés.

Le but de l'invention est de remédier aux inconvénients précités en réalisant un dispositif de sélection de circuits intégrés qui procède par excitation impulsionnelle et périodique des circuits, avec un facteur de forme pouvant être de quelque pour-cent et multiplexage des différentes zones de sélection.

Un objet de l'invention est de commander les amplificateurs selon un adressage déterminé de manière à produire successivement des séquences d'excitation qui sont dirigée respectivement vers les groupes de circuits intégrés concernés par ces séquences; il est produit un multiplexage des adresses des différents groupes de circuits intégrés enfermés dans la chambre climatique.

Un autre objet de l'invention est de produire également de manière séquentielle et périodique les différentes tensions d'alimentation nécessaires aux groupes de circuits intégrés successivement excités par les signaux des amplificateurs, de manière à reproduire au niveau des circuits intégrés les effets de coupures de secteur d'alimentation.

Suivant un autre objet de l'invention, le dispositif de sélection utilise des moyens matériels et logiciels prélevés sur des systèmes testeur automatique; l'un de ces éléments est une unité de traitement et de programmation d'un testeur automatique de circuits intégrés utilisé pour élaborer des signaux numériques de commande des amplificateurs, un deuxième élément est une console de visualisation et de dialogue permettant de visualiser le programme d'excitation des circuits à sélectionner à partir du programme de test de ces mêmes circuits. Le montage offre la possibilité à l'utilisateur de gérer par dialogue sur la console de visualisation, l'aiguillage des séquences d'excitation ou un tableau de l'état d'occupation de travail à l'intérieur de la chambre climatique.

Il est connu par le brevet US 3 789 205 une technique de test de composants du type MOSFET disposés sur un tableau et permettant d'isoler électroniquement chacun d'eux pour le tester individuellement. Les circuits associés aux bornes des composants à tester sont déterminés pour des composants MOSFET et de manière à placer les bornes des composants, excepté celui en cours de test, au niveau logique 1 durant la phase d'attente, et celles du composant en cours de test au niveau logique utile "0" ou "1" selon la borne considérée. Le resultat est visualisé. La méthode permet d'isoler et d'extraire aisement un composant defectueux.

Cette technique ne se rapporte toutefois pas à un dispositif de sélection par vieillissement de circuits intégrés de manière générale. Elle n'est pas concernée par des problèmes de fiabilisation avec notion d'accélération de processus de défaillance et elle n'exige, pour sa mise en oeuvre, que des amplificateurs à faible débit. Dans le dispositif de sélection proposé, l'application séquencée des alimentations et des stimulis entraînent un échauffement minimal interne des circuits intégrés à sélectionner, de manière à garantir des températures de jonction aussi proches que possible de la température ambiante programmée du traitement thermique et permettre ainsi une régulation aisée de la température dans l'étuve. Ainsi qu'il apparaîtra dans la description qui suit, la technique utilisée permet de traiter un nombre très élevé de composants électroniques montés en parallèle sous réserve toutefois de disposer d'amplificateurs de puissance ayant une débit suffisamment élevé.

Selon l'invention, le but visé est atteint en effectuant la sélection de circuits intégrés selon le procédé dont les caractéristiques techniques figurent dans la revendication 1, et selon le dispositif de la revendication 4.

Les particularités de l'invention apparaîtront dans la description qui suit donnée à titre d'exemple non limitatif à l'aide des figures annexées qui représentent:

figure 1, un diagramme d'un premier mode ds réalisation d'un dispositif de sélection de circuits intégrés conforme à l'invention;

figure 2, un diagramme d'un deuxième mode de réalisation du dispositif de sélection;

figure 3, des formes d'ondes se rapportant au fonctionnement du dispositif selon la figure 2;

figure 4, un schéma partiel correspondant à un mode de réalisation préférentiel d'un dispositif de sélection conforme à la présente invention;

figure 5, un diagramme d'un dispositif de sélection selon la figure 4, et

figure 6, un schéma d'un exemple de réalisation d'un dispositif de sélection selon la figure 5.

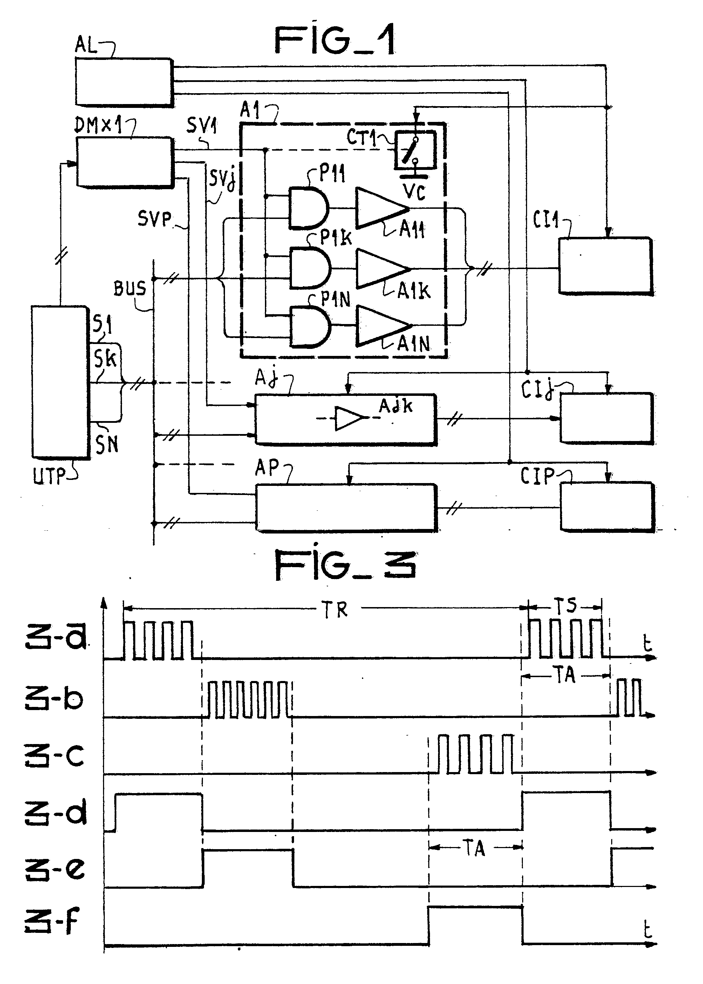

Dans un dispositif de sélection de circuits intégrés à haute fiabilité, les circuits intégrés sont rassemblés par groupes distincts et placés sur des plateaux dans une étuve. Sur la figure 1 on a considéré P groupes de circuits intégrés CII à CIP, les circuits d'un groupe donné étant considérés avoir un même nombre de broches et/ou pouvoir être excités par la même distribution de signaux. On peut donc considérer que le dispositif selon la figure 1 est prévu pour élaborer P groupements de signaux d'excitation destinés à exciter P types de circuits intégrés. Ces signaux d'excitation sont élaborés par des amplificateurs de puissance à partir de signaux numériques appliqués sur leurs entrées. Les signaux numériques sont produits par une unité de traitement et de programmation UTP. La réalisation selon la figure 1 reprend une configuration d'amplificateurs suivant laquelle ceux-ci sont répartis en P groupes A1 à AP pour élaborer les P groupements de signaux d'excitation distincts, chaque groupe d'amplificateurs Aj étant constitué par une batterie d'amplificateurs élémentaires A11 à A1N, le nombre total N étant fonction du nombre de signaux dynamiques compris dans un groupement. Suivant des techniques connues ce nombre peut atteindre jusquà sept signaux mais il va de soit que ce nombre n'est pas limité à sept et pourra être supérieur, voire égal au nombre total de broches des circuits intégrés à exciter, dans une conception des circuits d'interconnexions entre amplificateurs et circuits intégrés rendant possible cette configuration d'interface.

Conformément à l'invention les groupements de signaux d'excitation utiles ne sont pas transmis simultanément par les amplificateurs A1 à Ap mais l'un après l'autre et de manière périodique. Pour ce faire, les signaux numériques issus de l'unité de traitement et de programmation sont en nombre N et transmis en parallèle aux N groupes amplificateurs A1 à Ap au moyen d'une ligne omnibus. L'unité de traitement et de programmation ne comporte donc que N sorties reliées par cette ligne aux amplificateurs. Pour obtenir la distribution séquentielle des signaux d'excitation, le dispositif de sélection comporte en outre un circuit distributeur logique ou démultiplexeur DMX1 connecté par P sorties respectivement aux ensembles A1 à AP et adressé par l'unité de traitement UTP à son entrée, l'adressage pouvant être effectué par un mot de 8 bits par exemple. Selon l'adresse transmise, un seul des ensembles A1 à AP est validé par la sortie correspondante du circuit démultiplexeur DMX1 et seul le groupe d'amplificateur Aj correspondant transmettra un groupement de signaux d'excitation à l'ensemble des circuits intégrés associés Clj. Le détail de la validation ou de l'inhibition des amplificateurs est représenté à titre d'exemple sur l'ensemble A1. Il peut consister en des portes ET P11 à P1N interposées respectivement sur la connexion en amont des amplificateurs élémentaires A11 à A1N, ces portes à deux entrées recevant par la deuxième entrée le signal de validation SVj correspondant.

Suivant une relisation pratique, la fonction démultiplexage est assurée par un circuit DMX1 groupant un microprocesseur, des interfaces adaptateurs de périphérique et une mémoire vive de masse, en sorte de se substituer à l'UTP durant l'exercice continu de déverminage des composants électroniques. Le processeur à haute capacité de mémoire prend ainsi en charge pendant la sélection de circuits intégrés l'élaboration des séquences de simuli préprogrammées par l'UTP avant le processus de sélection des circuits intégrés. Cette libération de l'UTP lui permet d'effectuer dans de meilleurs conditions les autres fonctions opérationnelles dont elle est chargée, à savoir, fonctions de programmation, de sécurité des étuves, de visualisation, de surveillance, de pilotage de machines à commande numérique associées au dispositifs de sélection, etc... La liaison UTP au microprocesseur s'effectue via un circuit interface normalisé.

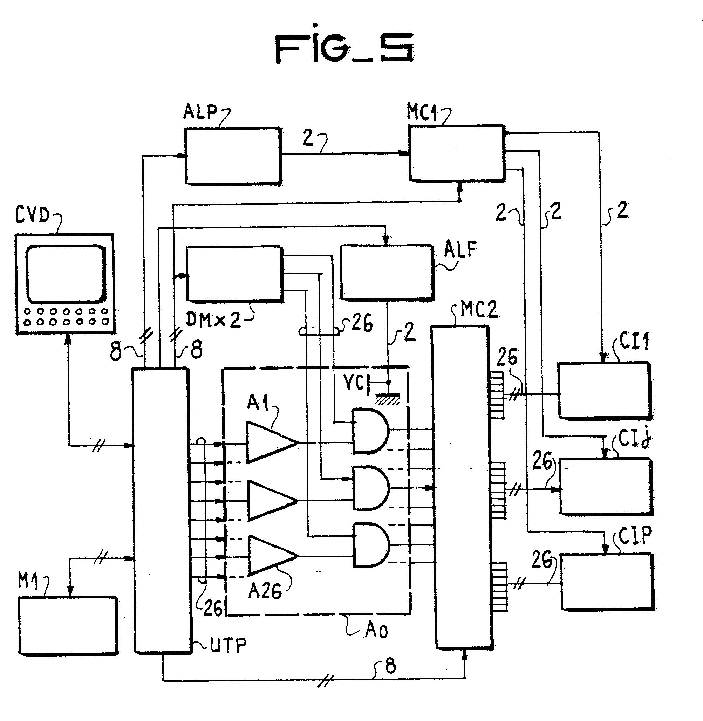

Les courbes des figures 3a à 3c montrent le fonctionnement séquentiel et successif dans le temps. La courbe 3a représente un signal issu d'une voie de l'ensemble A1, la courbe 3b se rapporte à un signal de l'ensemble amplificateur suivant A2, et la courbe 3c correspond à un signal délivré par le dernier ensemble amplificateur AP. La durée TS correspond à celle de validation, ce qui fait que le cycle total occupe une durée au moins égale P×TS. Le cycle peut être ensuite répété à la période TR correspondant au moins à cette valeur. Dans le concept de la figure 1 les tensions alimentations sont délivrées par des circuits AL qui fournissent les valeurs respectives +5 V, +12 V, +15 V, +5,2 V, −1,4 V, etc.... nécessaires aux différents types de circuits intégrés. Par souci de simplification les circuits amplificateurs élémentaires et circuits portes inclus dans chacun des ensembles Aj pourra être alimenté par la même valeur de tension d'alimentation continue que celle appliquée aux circuits intégrés associés à cet ensemble amplificateur. En outre on peut considérer, mais ce n'est pas absolument nécessaire d'insérer un circuit interrupteur CT1 sur la voie d'alimentation des circuits de l'ensemble correspondant A1 et qui est commandé par le signal de validation SV1.

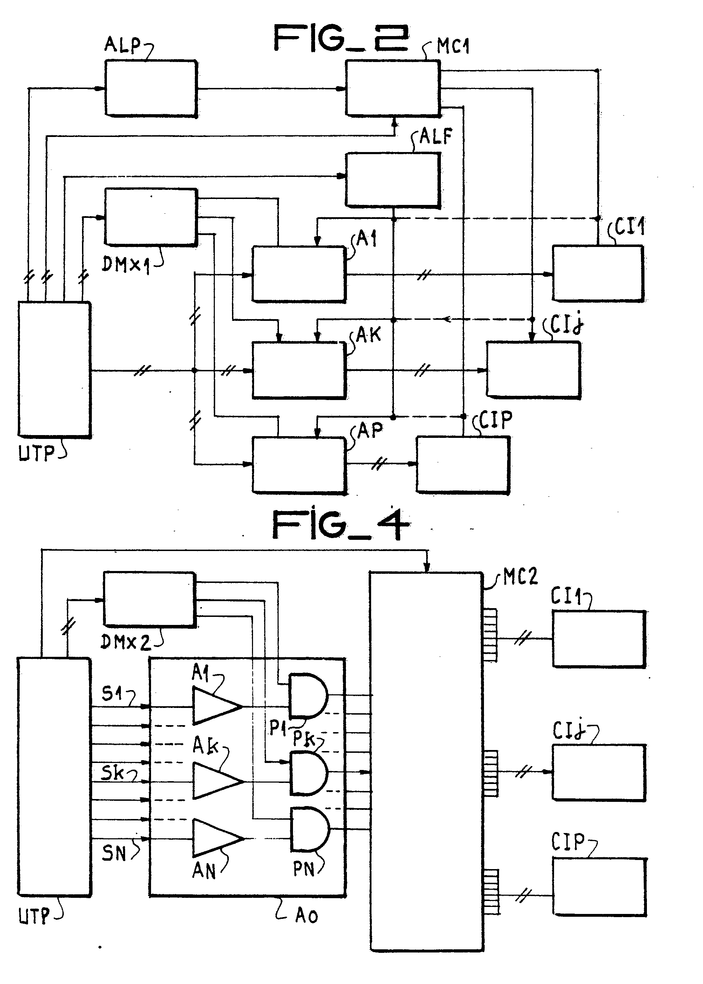

La figure 2 représente une version plus avantageuse que celle de la figure 1 suivant laquelle le principe de la répartition séquentielle des signaux est étendu également au niveau des signaux d'alimentation. Dans cette version les moyens d'alimentation sont constitués par au moins une alimentation programmable IEEE adressée par huit fils à partir de l'unité de traitement UTP et délivrant par une sortie la tension continue VC correspondant à l'adressage. La sortie d'alimentation VC est transmise au groupe de circuits intégrés CIj destiné à recevoir cette tension au moment considéré, grâce à un circuit distributeur ou matrice de commutation MC1 correspondant à un circuit démultiplexeur de signaux de puissance. Le circuit MC1 est également adressé par l'unité UTP, il comporte P sorties connectées respectivement au P groupes de circuits intégrés CI1 à CIP. En fait ces connexions s'effectuent par les circuits d'interface constitués par les plateaux support de circuits intégrés. Les sorties d'alimentation peuvent être également comme dans le cas de la figure 1 être raccordées aux ensembles amplificateurs A1 à AP correspondant. Une solution préférée consiste à alimenter les amplificateurs en sortie d'une alimentation séparée fixe ALF qui délivre une tension d'alimentation de valeur supérieure à celle maximale fournie par l'alimentation programmable ALP.

Les figures 3d à 3f représentent les signaux d'alimentation respectifs des groupes de circuits intégrés CI1, CI2 et CIP. La durée TA du créneau formant le signal d'alimentation est répétée périodiquement à la période TR. Cette durée TA est choisie légèrement supérieure et chevauchant la durée TS d'élaboration des signaux dynamiques correspondants.

La figure 4 représente une réalisation préférée d'un dispositif de sélection de circuits intégrés conforme à l'invention. Le procédé utilisé reste le même que dans le cas de la figure 1 ou de la figure 2 mais l'organisation structurelle est énormément simplifiée par le fait que l'on utilise qu'une seule batterie d'amplificateurs élémentaires en nombre N, la distribution s'effectuant cette fois de côté sortie des amplificateurs grâce à une matrice de commutation MC2 pour envoyer les signaux respectivement et successivement vers les différents groupes de circuits intégrés de type différent. Dans cette version la commande de validation est reportée également en aval des N amplificateurs A1 à AN par des porte ET qui sont alimentées séparément par leur deuxième entrée par les N sorties respectives d'un circuit démultiplexeur DMX2 comportant N sorties. La voie AK validée à un instant donné est ensuite connectée vers le groupement de circuits intégrés CIj corres-pondant grâce à la matrice de commutation ou circuit distributeur MC2 lequel est adressé par l'unité de traitement UTP. La matrice de commutation MC2 peut être obtenue avantageusement au moyen de diodes selon une réalisation simple et économique. On voit que cette nouvelle version permet de diviser par P le nombre d'amplificateurs, or le nombre P peut atteindre 24 et une valeur possible pour N est 28; on se rend compte que cette solution permet d'économiser 23 fois 28 soit 644 amplificateurs. Il est entendu que dans cette version préférentielle il est advantageux de commuter également les alimentations en procédant selon le circuit de la figure 2.

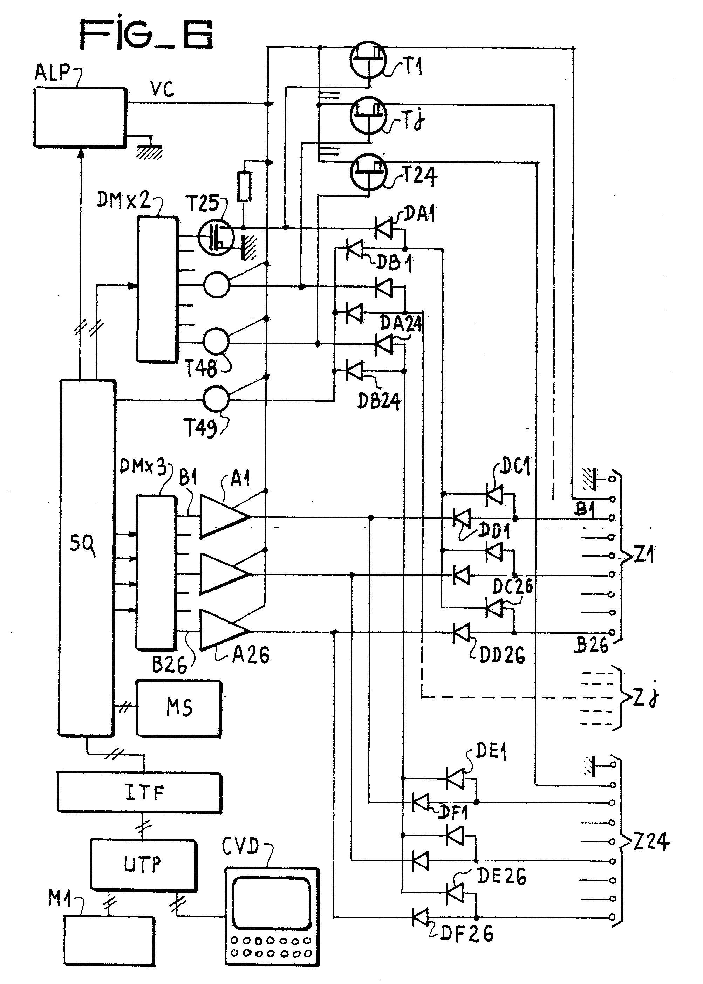

Un ensemble de sélection de ce type est représenté sur la figure 5 où sont représentées en outre associées à l'unité de traitement et de programmation UTP une mémoire de masse M1 et une console de visualisation CVD.

L'unité de traitement UTP, la mémoire M1 et la console CVD constituent des éléments pouvant faire partie d'un ensemble de testeur automatique de circuits intégrés et disponible sur catalogue. La mémoire de masse M1 peut être constituée à base de floppy disques, l'unité de traitement et de programmation peut être à base d'un microprocesseur. On peut en outre utiliser encore plus loin les possibilités du testeur automatique en empruntant dans le software la programmation relative aux tests fonctionnels pour constituer dans le dispositif de sélection objet de l'invention la programmation relative aux signaux dynamiques.

La figure 6 se rapporte à un mode de réalisation d'un dispositif de sélection selon les figures 4 et 5. L'unité de traitement et de programmation comporte des éléments mémoire de masse M1 à floppy disque ou autre, console de visualisation et de dialogue CVD, et unité de traitement UTP de type utilisé dans un appareil testeur automatique de circuits intégrés. Pour l'application envisagée à la sélection de circuits intégrés, l'unité de traitement UTP est connectée aux amplificateurs et autres circuits par l'intermédiaire de moyens d'adaptation comportant, à travers un circuit ITF d'interface IEEE, un circuit séquenceur SQ d'acquisition et de traitement des signaux d'alimentation et des signaux dynamiques appelés "stimuli". La ligne omnibus allant de l'unité UTP au séquenceur SQ transporte des données et adresses allant vers et venant de l'unité UTP. Le séquenceur SQ est associé à une mémoire de programme de travail MS dont le rôle est définir les instructions dans leur ordre logique d'exécution permettant à l'UTP de faire fonctionner les amplificateurs pour le déverminage des circuits intégrés en place dans les étuves. Les signaux dynamiques ou stimuli sont envoyés aux amplificateurs A1 à A26 à travers un circuit démultiplexeur DMX3 pour aller alimenter ensuite 26 broches des circuits d'un type donné. Ces circuits intégrés sont répartis par zones, on considère 24 types différents possibles a priori et les zones sont numérotées de Z1 à Z24, étant entendu qu'il sera produit autant de groupements de stimuli sur les sorties B1 à B26 de l'ensemble de traitement et de programmation. Les deux bornes restantes nos 27 et 28 des circuits seront affectées respectivement d'une tension d'alimentation VC et du potentiel masse de référence. Le séquenceur SQ adresse l'alimentataion programmable ALP qui délivre la tension continue VC; cette tension est transmise à travers la matrice de commutation MC1 formée à partir de transistors MOS, c'est-à-dire à effet de champ, T1 à 24 pour alimenter la borne 27 des zones respectives Z1 à Z24. La validation des alimentations est obtenue par le circuit DMX2 constitué par un décodeur de validation ayant 24 sorties transmises respectivement à travers également un transistor à effet de champ T24 à T28. Un autre transistor T49 est inclus sur une voie de sécurité générale issue du séquenceur assurant l'inhibition alimentation et stimuli. Les transistors T25 à T49 sont alimentés directement par la tension d'alimentation VC. Les amplificateurs A1 à A26 sont à très large bande passante (100 MHz) et comportent également un transistor de sortie du même type que précédemment. Tous ces transistors sont montés en commutateur analogique. Les éléments restant sont constitués par un ensemble de diodes formant la matrice MC2. Le fonctionnement est le suivant: on supposera par exemple que le circuit de décodage alimente le transistor T25 lequel débloque la diode DA1 qui à son tour débloque la batterie de diodes DC1 à DC26 permettant de laisser passer les signaux de la zone Z1 correspondante à travers les diodes DD1 à DD26. Une deuxième alimentation continue pourra être prévue pour la sélection de circuits plus complexes exigeant deux alimentations séparées différentes. Les différentes zones Z1 à Z24 sont, par essence même, chargées de circuits intégrés de même type dont les broches B1 à B26 plus l'alimentation VC et la masse, de même numéro sont cablées en parallèle sur les éléments ou plateaux supports à travers éventuellement des cartes filles. Les dénominations B1 à B26 sont propres au système, une table d'équivalence codée dans la mémoire du système existe pour la correspondance entre les broches du système en sortie de l'unité de traitement (sorties du circuit DMX3) et les broches des circuits intégrés en aval. L'aiguillage physique des stimulis par le processeur central UTA tient donc compte de cette table écrite au moment de l'élaboration du programme de test de chaque circuit intégré. Les particularités de cette réalisation sont liées au multiplexage des séquences de stimuli par zone, à la commutation des stimuli par une matrice à diode, à la commutation des alimentations par une matrice à transistor à effet de champ, et à la possibilité d'exercer une fonction de verrouillage en cas d'incident détecté par l'ensemble de traitement au niveau des chambres climatiques.

Le procédé et le dispositif de sélection conformes à l'invention présentent ainsi de multiples avantages. La base de temps, ou horloge, de l'unité de traitement attaque le circuit démultiplexeur DMX1 ou DMX2, et on peut considérer que le signal 1 en sortie attaque successivement les étages amplificateurs A1 à AN pour les valider. Pour l'état O du signal de validation la voie d'amplification est coupée et se comporte comme une haute impédance vis-à-vis des circuits intégrés correspondants connectés à cette voie. La fréquence des signaux d'excitation transmis pendant la durée TS sur chaque voie 1 à P peut être considérée très élevée vis-à-vis de la pratique courante, par exemple 1 MHz au lieu de 50 à 60 Hz. En outre, le fait de pratiquer à une cadence très élevée les coupures d'alimentation dans le concept des figures 2 ou 5 permet de reproduire de manière très fréquente les états de mise sous tension, ou coupure d'alimentation, ou arrêt de tension, sur les circuits à sélectionner. Il en résulte une procédure de sélection améliorée et qui peut être pratiquée pendant un temps plus réduit pour aboutir à des résultats comparables sinon meilleurs que ceux de la pratique conventionnelle où les signaux dynamiques et ceux d'alimentation étaient transmis de manière continue. L'alimentation dite programmable IEEE est réalisable avec une alimentation RHODE et SCHWARZ type NGPU 70 V/20 A/350 W qui peut délivrer sept valeurs d'alimentation distinctes. Dans le cas où ce nombre serait insuffisant d'autres alimentations, ou une autre alimentation programmable, peuvent être prévues pour compléter les valeurs d'alimentations nécessaires à l'ensemble de sélection.

**Revendications**

1. Procédé de sélection de circuits intégrés à haute fiabilité par traitements thermique et dynamique, comportant:

— le rassemblement des circuits intégrés à sélectionner par groupes distincts sur des plateaux disposés dans une étuve, de manière à faire subir aux circuits intégrés un traitement thermique déterminé, chaque groupe correspondant à un type de circuits intégrés, lesquels se répartissent selon P types définis essentiellement d'après leur nombre de broches de raccordement et d'après les signaux d'excitation, dits stimulis, à leur appliquer;

— la production des différentes tensions d'alimentation continues nécessaires aux différents types de circuits intégrés à sélectionner;

— l'élaboration desdits signaux d'excitation sous forme de P groupements distincts de signaux destinés respectivement aux P groupes de circuits intégrés pour effectuer le traitement dynamique, au moyen d'une excitation impulsionnelle et périodique des circuits intégrés avec un facteur de forme qui peut être de quelques pour-cent et un multiplexage des différents groupes à sélectionner, lesdits P groupements de signaux d'excitation étant produits périodiquement et successivement au cours de chaque période, en sorte que chacun d'eux n'est appliqué que séquentiellement au groupe de circuits intégrés du type correspondant, lesdites applications séquentielles de stimulis produisant un dégagement calorifique réduit des circuits intégrés permettant corrélativement de traiter un grand nombre de circuits intégrés moyennant l'utilisation d'amplificateurs de puissance de débit adapté à la production desdits stimulis, ces derniers pouvant être élaborés à partir de la programmation des signaux de test fonctionnel utilisée lors de procédures de test automatique prévues pour les circuits intégrés.

2. Procédé selon la revendication 1, caractérisé en ce que lesdites tensions d'alimentation continues sont également produites périodiquement et successivement, à la même cadence que les signaux d'excitation, en sorte d'alimenter les circuits intégrés d'un groupe avec la tension prévue pour ce groupe et ce, pendant une durée sensiblement du même ordre mais chevauchant celle d'application des signaux d'excitation transmis à ce groupe de circuits intégrés.

3. Procédé selon la revendication 1 ou 2, caractérisé en ce que les signaux d'excitation sont formés d'impulsions à haute fréquence.

4. Dispositif de sélection de circuits intégrés à haute fiabilité par traitement thermique et dynamique, procédant selon l'une quelconque des revendications 1 à 3 et comportant une pluralité d'amplificateurs de puissance A1 à AP pour produire les groupements successifs de signaux d'excitation nécessaires à la sélection des différents types de circuits intégrés prévus, et un dispositif générateur de signaux numériques de commande alimentant respectivement l'entrée des amplificateurs, caractérisé en ce qu'il comporte un circuit démultiplexeur (DMX 1) connecté par une pluralité de sorties auxdits amplificateurs pour commander leur fonctionnement périodique et produire les groupements successifs des signaux d'excitation, le dispositif générateur étant constitué par une unité de traitement programmable (UTP) qui assure l'adressage du circuit démultiplexeur.

5. Dispositif selon la revendication 4, et dans lequel les amplificateurs sont constitués par P groupements (A1 à AP) de N amplificateurs (A11 à A1N) pour former des groupements ayant chacun au plus N signaux d'excitation, caractérisé en ce que l'unité de traitement (UTP) alimente l'entrée des amplificateurs par N sorties raccordées au moyen d'une ligne ombibus en parallèle respectivement sur les entrées des P groupements, le nombre N étant au plus égal au nombre maximal de broches présenté par les différents types de circuits intégrés à sélectionner.

6. Dispositif selon la revendication 4 ou 5, procédant selon la revendication 2, ou selon l'un des ensembles de revendications 2 et 3, 2 et 4, et dans lequel des moyens d'alimentation sont prévus pour alimenter les différents types de circuits intégrés à sélectionner ainsi que les circuits amplificateurs générateurs des signaux d'excitation, caractérisé en ce que ces moyens d'alimentation sont formées par au moins une alimentation (ALP) programmable IEEE adressée à partir de l'unité de traitement et dont la sortie est connectée à un circuit de distribution (MC1) adressé par l'unité de traitement et qui est connecté par ses sorties respectivement aux différents groupes de circuits (CI1 à CIP) à alimenter.

7. Dispositif selon la revendication 6, caractérisé en ce que la sortie de l'alimentation programmable (ALP) est connectée directement au circuit amplificateur, les sorties du circuit de distribution (MC1) étant connectées aux divers groupements de circuits intégrés.

8. Dispositif selon la revendication 4 ou l'un des ensembles de revendication 4 et 6, 4 et 7, caractérisé en ce que les amplificateurs sont en nombre N (A1 à AN), N étant un nombre maximal de signaux d'excitation d'un groupement, et l'unité de traitement (UTP) alimentant respectivement les N amplificateurs par N sorties, le circuit demultiplexeur (DMX 2) commandant séquentiellement le fonctionnement des amplificateurs pour produire successivement les groupements de signaux d'excitation nécessaires, un deuxième circuit de distribution (MC2) permettant de connecter les N sorties amplificatrices vers le groupement de circuits intégrés (CIj) auquel ces signaux sont destinés.

9. Dispositif selon l'une quelconque des revendications 4 à 7, caractérisé en ce que les moyens de commande des amplificateurs comportent une porte ET (PIk) sur chaque entrée reliée par une entrée à l'unité de traitement, par sa deuxième entrée au circuit démultiplexeur (DMX 1) et par sa sortie à un circuit amplificateur (Alk).

10. Dispositif selon la revendication 8, caractérisé en ce que les moyens, de commande des amplificateurs comportent une porte ET (Pk) connectée par une entrée à la sortie de l'amplificateur (Ak), par une deuxième entrée au circuit démultiplexeur (DMX 2) et par sa sortie au deuxième circuit de distribution (MC2).

11. Dispositif selon l'une quelconque des revendications 1 à 10, caractérisé en ce que l'unité de traitement (UTP) est associée avec une mémoire de masse (M1) et avec une console de visualisation (CVD) et de dialogue, les données mises en mémoire comportant un programme de test électrique fonctionnel des circuits intégrés à sélectionner utilisé pour produire les signaux numériques de commande des amplificateurs.

12. Dispositif selon la revendication 8 ou 10, ou selon l'ensemble des revendications 8 et 11, ou 10 et 11, caractérisé en ce que le circuit de distribution des alimentations (MC1) est réalisé au moyen de transistors à effet de champ (T1 à T24) et le deuxième circuit de distribution (MC2) comporte une matrice de diodes (DA1 à DA24, DB1 à DB24, DC1 à DC26, DD1 à DD26, . . ., DE1 à DE26, DF1 à DF26).

13. Dispositif selon l'une quelconque des revendications 1 à 12, caractérisé en ce que l'unité de traitement (UTP) est connectée aux amplificateurs par l'intermédiaire d'un processus à haute capacité de mémoire (MS), prenant en charge, pendant le déverminage des circuits intégrés, la génération des séquences (SQ) de stimuli préprogrammées par l'UTP avant le processus de déverminage des circuits intégrés.

**Patentansprüche**

1. Verfahren zum Selektieren von integrierten Schaltungen hoher Zuverlässigkeit durch thermische und dynamische Behandlung, umfassend:

— die Zusammenfassung der zu selektierenden integrierten Schaltungen in getrennten Gruppen auf Platten, die in einen Heizbehälter eingebracht werden, so daß die integrierten Schaltungen eine bestimmte Wärmebehandlung erfahren, wobei jede Gruppe einem Typ integrierter Schaltungen entspricht, welche in P Arten unterteilt sind, die im wesentlichen durch die Anzahl ihrer Anschlußstifte und durch die an sie anzulegenden Erregungssignale, die als sogenannte Stimuliersignale bezeichnet werden, definiert sind;
— die Erzeugung der verschiedenen Versorgungsgleichspannungen, die für die verschiedenen Arten von zu selektierenden integrierten Schaltungen benötigt werden;
— die Erzeugung der genannten Erregungssignale in Form von P getrennten Gruppen von Signalen, die jeweils für die P Gruppen von integrierten Schaltungen bestimmt sind, um die dynamische Behandlung durch impulsförmige und periodische Erregung der integrierten Schaltungen mit einem Formfaktor durchzuführen, der einige Prozent betragen kann, sowie durch eine Multiplexierung der verschiedenen zu selektierenden Gruppen, wobei die genannten P Gruppen von Erregungssignalen periodisch und sukzessiv im Verlaufe jeder Periode erzeugt werden, so daß jedes von ihnen nur sequentiell an die Gruppe von integrierten Schaltungen der entsprechenden Art angelegt wird, wobei ferner das genannte sequentielle Anlegen von Stimuliersignalen eine geringe Wärmeabgabe der integrierten Schaltungen verursacht, durch welche eine große Anzahl von integrierten Schaltungen korrelativ behandelt werden kann unter Anwendung von Leistungsverstärken, deren Leistungsfähigkeit an die Erzeugung der Stimuliersignale angepaßt ist, wobei letztere aufgrund der Programmierung der Funktionstestsignale erzeugt werden können, welche währen automatischer Testprozeduren verwendet werden, die für die integrierten Schaltungen vorgesehen sind.

2. Verfahren nach Anspruch 1, dadurch gekennzeichnet, daß die genannten Versorgungsgleichspannungen ebenfalls periodisch und sukzessiv im selben Rhythmus wie die Erregungssignale erzeugt werden, so daß die integrierten Schaltungen einer Gruppe mit der für diese Gruppe vorgesehenen Spannung versorgt werden, und zwar während einer Dauer, die im wesentlichen dieselbe Größenordnung hat wie diejenige des Anlegens der dieser Gruppe von integrierten Schaltungen zugeführten Erregungssignale, sich jedoch mit ihr überschneidet.

3. Verfahren nach Anspruch 1 oder 2, dadurch gekennzeichnet, daß die Erregungssignale durch Hochfrequenzimpulse gebildet sind.

4. Vorrichtung zum Selektieren von integrierten Schaltungen hoher Zuverlässigkeit durch thermische und dynamische Behandlung gemäß einem der Ansprüche 1 bis 3, mit mehreren Leistungsverstärken (A1 bis AP) zu Erzeugung der aufeinanderfolgenden Gruppen von Erregungssignalen, welche für die Selektierung der verschiedenen vorgesehenen Arten von integrierten Schaltungen erforderlich sind, und mit einer Vorrichtung zur Erzeugung von digitalen Steuersignalen, welche jeweils den Eingang der Verstärker ansteuert, dadurch gekennzeichnet, daß sie eine Demultiplexierschaltung (DMX 1) un.faßt, welche über mehrere Ausgänge mit den genannten Verstärkern verbunden ist, um ihre periodische Funktion zu steuern und die aufeinanderfolgenden Gruppen von Erregungssignalen zu erzeugen, wobei die Generatorvorrichtung durch eine programmierbare Verarbeitungseinheit (UTP) gebildet ist, welche die Adressierung der Demultiplexierschaltung gewährleistet.

5. Vorrichtung nach Anspruch 4, bei welcher die Verstärker durch P Gruppen (A1 bis AP) von N Verstärkern (A11 bis A1N) gebildet sind, um

(18) pierungen zu bilden, welche jeweils ...ei..stens N Erregungssignale aufweisen, dadurch gekennzeichnet, daß die Verarbeitungseinheit (UTP) den Eingang der Verstärker über N Ausgänge speist, welche über eine Busleitung parallel jeweils mit den Eingängen der P Gruppierungen verbunden sind, wobei die Anzahl N höchstens gleich der maximalen Anzahl von Anschlußstiften ist, welche die verschiedenen Arten von zu selektierenden integrierten Schaltungen aufweisen.

6. Vorrichtung nach Anspruch 4 oder 5, bei welcher nach Anspruch 2 oder nach einer der Anspruchskombinationen 2 und 3, 2 und 4 vorgegangen wird und bei welcher Versorgungsmittel vorgesehen sind, um die verschiedenen Arten von zu selektierenden integrierten Schaltungen sowie die Verstärkerschaltungen zur Erzeugung der Erregungssignale zu speisen, dadurch gekennzeichnet, daß diese Versorgungsmittel durch wenigstens eine programmierbare Stromversorgung (ALP) vom Typ IEEE gebildet sind, welche durch die Verarbeitungseinheit adressiert wird und deren Ausgang mit einer Verteilerschaltung (MC1) verbunden ist, die durch die Verarbeitungseinheit adressiert wird und über ihre Ausgänge jeweils mit dem verschiedenen Gruppen von zu versorgenden Schaltungen (CI1 bis CIP) verbunden ist.

7. Vorrichtung nach Anspruch 6, dadurch gekennzeichnet, daß der programmierbare Speiseausgang (ALP) direkt mit der Verstärkerschaltung verbunden ist, während die Ausgänge der Verteilerschaltung (MC1) mit den verschiedenen Gruppen von integrierten Schaltungen verbunden sind.

8. Vorrichtung nach Anspruch 4 oder einer der Anspruchskombinationen 4 und 6, 4 und 7, dadurch gekennzeichnet, daß eine Anzahl V von Verstärken (A1 bis AN) vorgesehen ist, worin N eine maximale Anzahl von Erregungssignalen eine Gruppe ist, während die Verarbeitungseinheit (UTP) jeweils die N Verstärker über N Ausgänge speist, wobei die Demultiplexierschaltung (DMX2) sequentiel die Funktion der Verstärker steuert, um nacheinander die Gruppen von erforderlichen Erregungssignalen zu erzeugen, und wobei eine zweite Verteilerschaltung (MC2) die Verbindung der N Verstärkerausgänge mit der Gruppe von integrierten Schaltungen (CIj) gestattet, für welche diese Signale bestimmt sind.

9. Vorrichtung nach einem der Ansprüche 4 bis 7, dadurch gekennzeichnet, daß die Mittel zur Steuerung der Verstärker eine AND-Torschaltung (P1k) an jedem Eingang umfas.en, welche über einen Eingang mit der Verarbeitungseinheit, über ihren zweiten Eingang mit der Demultiplexierschaltung (DMX 1) und ihren Ausgang mit einer Verstärkerschaltung (A1k) verbunden ist.

10. Vorrichtung nach Anspruch 8, dadurch gekennzeichnet, daß die Mittel zur Steuerung der Verstärker eine AND-Torschaltung (Pk) umfassen, welche über einen Eingang mit dem Ausgang des Verstärkers (Ak), über einen zweiten Eingang mit der Demultiplexierschaltung (DMX 2) und ihren Ausgang mit der zweiten Verteilerschaltung (MC2) verbunden ist.

11. Vorrichtung nach einem der Ansprüche 1 bis 10, dadurch gekennzeichnet, daß die Verarbeitungseinheit (UTP) mit einem Massenspeicher (M1) und mit einer Sicht-und Dialogkonsole (CVD) verbunden ist, wobei die in den Speicher eingegebenen Daten ein Programm für einen elektrischen Funktionstest der zu selektierenden integrierten Schaltungen umfassen, welcher angewendet wird, um die digitalen Steuersignale für die Verstärker zu erzeugen.

12. Vorrichtung nach Anspruch 8 oder 10 oder der Anspruchskombination 8 und 11 oder 10 und 11, dadurch gekennzeichnet, daß die Versorgungs-Verteilungsschaltung (MC1) durch Feldeffekttransistoren (T1 bis T24) verwirklicht ist und die zweite Verteilungsschaltung (MC2) eine Diodenmatrix (DA1 bis DA24, DB1 bis DB24, DC1 bis DC26, DD1 bis DD26, . . ., DE1 bis DE26, DF1 bis DF26) enthält.

13. Vorrichtung nach einem der Ansprüche 1 bis 12, dadurch gekennzeichnet, daß die Verarbeitungseinheit (UTP) mit den Verstärkern über eine Speicherprozedur (MS) von hoher Kapazität verbunden ist, welche während der Prüfung der integrierten Schaltungen die Erzeugung der Sequenzen (SQ) von Stimuliersignalen übernimmt, die durch die UTP vor der Prozedur der Prüfung der integrierten Schaltungen einprogrammiert wurden.

**Claims**

1. Method of selection of high reliability integrated circuits by thermal and dynamic treatments, comprising:

— collecting integrated circuits to be selected in distinct groups on trays arranged in an oven in a manner to subject the integrated circuits to a determined thermal treatment, each group corresponding to one type of integrated circuits which are divided into P types essentially defined according to their number of connection pins and to the excitation signals, termed stimulation signals, to be applied thereto;
— the production of different d.c. supply voltages required for the different types of integrated circuits to be selected;
— the generation of said excitation signals as P distinct sets of signals respectively intended for the P groups of integrated circuits to perform the dynamic treatment by means of a pulse type and periodic excitation of the integrated circuits with a shape factor which may be of several percent, and multiplexing of the different groups to be selected, said P sets of excitation signals being periodically and successively produced during each period so that each of them is only sequentially applied to the group of integrated circuits of the corresponding type, said sequential applications of stimulating signals producing a low heat generation of the integrated circuits permitting the correlative treatment of a large number of integrated circuits by means of the use of power amplifiers having a rating adapted to the production of said stimulating signals, the latter being susceptible to be generated by the programming of the functional test signals used during the automatic test procedures provided for the integrated circuits.

2. Method according to claim 1, characterized in that said d.c. supply voltages are likewise produced periodically and successively at the same rhythm as the excitation signals to supply the integrated circuits of one group with the voltage provided for this group, i.e. for a duration substantially of the same order as but overlapping that of the application of the excitation signals transmitted to this group of integrated circuits.

3. Method according to claim 1 or 2, characterized in that the excitation signals are formed of high frequency pulses.

4. Device for the selection of high reliability integrated circuits by thermal and dynamic treatment, proceeding in accordance with any of claims 1 to 3, and comprising a plurality of power amplifiers (A1 to AP) for producing the sets of successive excitation signals required for the selection of different types of integrated circuits provided, and a device for the generation of digital control signals respectively feeding the inputs of the amplifiers, characterized in that it comprises a demultiplexing circuit (DMX 1) connected to said amplifiers through a plurality of outputs for controlling their periodic operation and producing the successive sets of excitation signals, the generator device being formed of a programmable processing unit (UTP) ensuring the addressing of the demultiplexing circuit.

5. Device according to claim 4 and wherein the amplifiers are formed by P sets (A1 to AP) of N amplifiers (A11 to A1N) for forming sets each having a maximum of N excitation signals, characterized in that the processing unit (UTP) feeds the inputs of the amplifiers through N outputs connected by means of a bus line in parallel to the inputs of the P sets, respectively, the number N being at the most equal to the maximum number of pins of the different types of integrated circuits to be selected.

6. Device according to claim 4 or 5, proceeding in accordance with claim 2 or with one of the claim combinations 2 and 3, 2 and 4, and wherein supply means are provided for feeding the different types of integrated circuits to be selected and the amplifier circuits generating the excitation signals, characterized in that the supply means are formed by at least one programmable IEEE supply (ALP) addressed by the processing unit and the output of which is connected to a distribution circuit (MC1) addressed by the processing unit and which is connected through its outputs to the different groups of circuits to be supplied (Cl1 to ClP), respectively.

7. Device according to claim 6, characterized in that the output of the programmable supply (ALP) is directly connected to the amplifier circuit, the outputs of the distribution circuit (MC1) being connected to the different sets of integrated circuits.

8. Device according to claim 4 or one of the claim combinations 4 and 6, 4 and 7, characterized in that there are N amplifiers (A1 to AN), N being the maximum number of excitation signals of one set, and the processing unit (UTP) respectively feeding the N amplifiers through N outputs, the demultiplexing circuit (DMX 2) sequentially controlling the operation of the amplifiers for the successive production of the sets of required excitation signals, a second distribution circuit (MC2) permitting to connect the N amplifier outputs to the set of integrated circuits (Clj) whereto the signals are to be applied.

9. Device according to any of claims 4 to 7, characterized in that the means for controlling the amplifiers comprise an AND gate (P1k) at each input connected to the processing unit through one of its inputs and to the demultiplexing circuit (DMX 1) through its second input and to an amplifier circuit (A1k) through its output.

10. Device according to claim 8, characterized in that the means for controlling the amplifiers comprise an AND gate (Pk) connected to the output of the amplifier (Ak) through one input, to the demultiplexing circuit (DMX 2) through a second input and to the second distribution circuit (MC2) through its output.

11. Device according to any of claims 1 to 10, characterized in that the processing unit (UTP) is associated with a mass memory (M1) and with a visualization and dialog terminal (CVD), the stored data comprising an electric functional test programme for the integrated circuits to be selected used to produce the digital control signals for the amplifiers.

12. Device according to claim 8 or 10 or to one of the claim combinations 8 and 11, 10 and 11, characterized in that the circuit (MC1) for the distribution of the supplies is formed by means of field effect transistors (T1 to T24) and the second distribution circuit (MC2) comprises a diode matrix (DA1 to DA24, DB1 to DB24, DC1 to DC26, DD1 to DD26, . . ., DE1 to DE26, DF1 to DF26).

13. Device according to any of claims 1 to 12, characterized in that the processing unit (UTP) is connected to the amplifiers through a high memory (MS) capacity procedure taking care of the generation of the sequences (SQ) of stimulation signals during the burn-in of the integrated circuits as programmed by the UTP prior to the burn-in procedures of the integrated circuits.

# FIG_1

# FIG_3

# FIG_2

ALP

MC1

ALF

DMX1

A1

CI1

AK

CIj

AP

CIP

UTP

# FIG_4

DMX2

MC2

CI1

A1

S1

Ak

P1 Pk

Sk

CIj

AN

SN

PN

UTP

Ao

CIP

# FIG_5

FIG_6